**Europäisches Patentamt**

**European Patent Office**

**Office européen des brevets**

(19)

(11) Publication number : **0 575 146 A2**

(12) **EUROPEAN PATENT APPLICATION**

(21) Application number : **93304650.0**

(22) Date of filing : **15.06.93**

(51) Int. Cl.$^5$ : **G06F 3/033**

(30) Priority : **16.06.92 US 899512**

(43) Date of publication of application :
**22.12.93 Bulletin 93/51**

(84) Designated Contracting States :
**DE FR GB**

(71) Applicant : **HONEYWELL INC.**
**Honeywell Plaza**
**Minneapolis MN 55408 (US)**

(72) Inventor : **Staggs, Kevin P.**
**7417 W. Sunnyside Drive**
**Peoria, Arizona 85345 (US)**
Inventor : **Huntingdon, James C.**
**1622 W. Avalon**
**Phoenix, Arizona 85015 (US)**

(74) Representative : **Fox-Male, Nicholas Vincent Humbert**
**Honeywell Control Systems Limited Charles Square**
**Bracknell Berkshire RG12 1EB (GB)**

(54) **A method for utilizing a low resolution touch screen system in a high resolution graphics environment.**

(57) A relatively low resolution touch screen system is utilized in a graphic display environment wherein the resolution of the graphic display is relatively high. The character resolution yields a lower target resolution, a single character being the target (or the desired character). The method zooms a predetermined number of characters around an initially reported position, the zooming increasing the character resolution such that target resolution is decreased to a value resulting in a touch screen resolution at least equal to or higher than resolution of the target resolution. Further, as the stylus is moved toward the desired character, a new position of the stylus is calculated. A check is made to determine if the new position is within the zoomed area. If it is, the processing continues ; otherwise the screen is rezoomed around the new position. When the desired character is under the pointing element, the pointing element utilized to reverse the calculation thereby identifying the position of the desired character, and thus the desired character itself.

Fig. 1

## BACKGROUND OF THE INVENTION

The present invention relates to graphic display systems, and more particularly, to a method for utilizing a touch screen system having a relatively low resolution in a relatively high resolution graphics environment.

Presently, touch screen systems are utilized which allows direct information input to an information processing apparatus from a coordinate position on a display screen by pointing out a desired position on a display of a cathode ray tube (CRT) display device (or some other like device). This technique is well accepted and has become the accepted standard for process operator interaction today. However, this technology utilizes a low resolution infrared LED touch screen with a resolution of 127 by 95 to select targets on a display with a resolution of 640 by 448. Even though the touch screen resolution is lower than that of the display, selecting targets was not a problem since the minimum target size is 8 by 8. This results in a target resolution of 80 by 56 which is less than the resolution of the touch screen.

However, when higher resolution displays are utilized, such as a display having a 1280 by 1024 resolution for example, the resultant target resolution is 160 by 128. Thus, targets on this high resolution display cannot be selected with the current touch screen resolution. Thus there is provided by the present invention, a method whereby a low resolution touch screen system is utilized to permit target selection on a high resolution graphics display.

## SUMMARY OF THE INVENTION

Therefore, there is provided by the present invention, a method for utilizing a low resolution touch screen with a high resolution graphics display. The method of the present invention selects a character being displayed on a display using a pointer element. The display has a first resolution and a touch screen system associated with the display has a second resolution. The character has a third resolution resulting in a target resolution, such that the target resolution is higher than the resolution of the touch screen system. The touch screen system transmits to a data processing unit processing the display, an X and Y coordinate signal of the pointed character. The method comprises the steps of, when a character is pointed to, accepting an initial X and Y coordinate value from the touch screen system, and calculating a corresponding X and Y coordinate value of the display. Then the initial X and Y coordinate values and the corresponding calculated X and Y coordinate values are saved. The display is zoomed a predetermined number of characters around the initial X and Y coordinate values. If the character to be selected is not under the pointer, the pointer element is moved towards the desired character, otherwise the pointer element is withdrawn. Updated X and Y coordinate position values of the pointer location is continually accepted on a periodic basis. A new point is calculated to determine if the new point (i.e., the pointer element) is within the zoomed area. If it is, the processing continues; otherwise, the display is restored and the display is rezoomed around the new point. The pointer element is moved until the desired character is under the pointer. The pointer element is then withdrawn, the new point calculated from above having the and Y coordinate values of the desired character, thereby permitting the desired character to be selected.

Accordingly, it is an object of the present invention to provide a method for utilizing a low resolution touch screer with a high resolution graphics display.

It is another object of the present invention to provide a method for utilizing a low resolution touch screen to select a character of a display whereby the display as a relatively high resolution.

These and other objects of the present invention will become more apparent when taken in conjunction with the following description and attached drawings, wherein like characters indicate like parts, and which drawings form a part of the present application.

## BRIEF DESCRIPTION OF THE DRAWINGS

Figure 1 shows a block diagram of a process control system of the preferred embodiment in which the present invention is utilized;

Figure 2 shows a block diagram of common elements of each physical module of the process control system of Figure 1;

Figure 3 shows a functional block diagram of a typical physical module of the process control system;

Figure 4 shows a partial, functional block diagram of the existing system and the opened system of the preferred embodiment;

Figure 5 shows a functional block diagram of an open operator station of the preferred embodiment;

Figure 6 shows a block diagram of a graphics card of the preferred embodiment of the universal station;

Figure 7, which comprises Figures 7A and 7B, shows examples of screen displays of the display unit of the process control system;

Figure 8 shows a flow diagram of the method of the present invention;

Figure 9 shows a partial display screen showing a partial row of characters with the corresponding display pixel value and beam of the touch screen system; and

Figure 10 shows a partial expanded character display of Figure 9 according to the method of the present invention.

## DETAILED DESCRIPTION

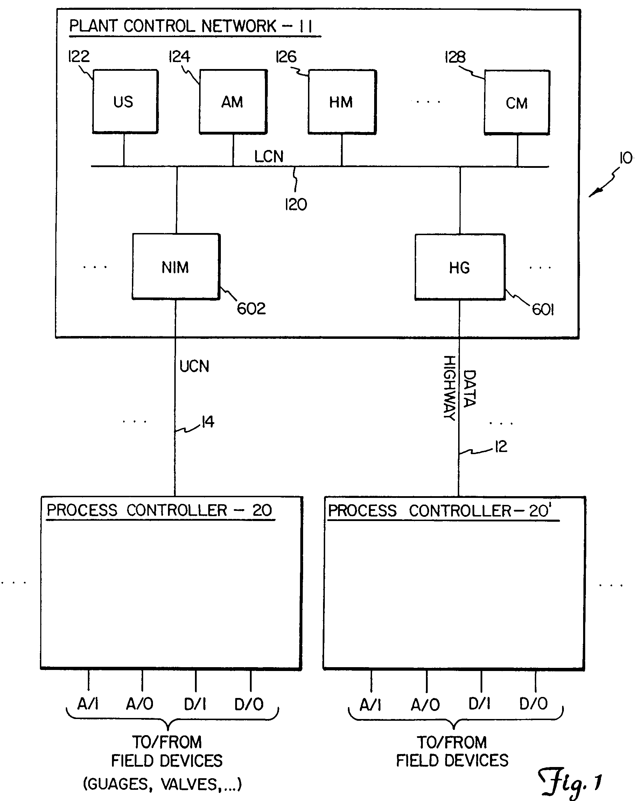

Before describing the method of the present invention, it will be helpful in understanding a system environment in which the invention is utilized. Referring to Figure 1, there is shown a block diagram of a process control system 10 of the preferred embodiment in which the present invention can be found. The process control system 10 includes a plant control network 11, and connected thereto is a data highway 12, which permits a process controller 20' to be connected thereto. In the present day process control system 10, additional process controllers 20' can be operatively connected to the plant control network 11 via a corresponding highway gateway 601 and a corresponding data highway 12. A process controller 20, an interface apparatus which includes many new, additions, improvements, and features over the process controller 20', is operatively connected to the plant control network 11 via a universal control network (UCN) 14 to a network interface module (NIM) 602. In the preferred embodiment of the process control system 10, additional process controllers 20 can be operatively connected to the plant control network 11 via a corresponding UCN 14 and a corresponding NIM 602. The process controllers 20, 20' interface the analog input and output signals, and digital input and output signals (A/I, A/O, D/I, and D/O respectively) to the process control system 10 from the variety of field devices (not shown) of the process being controlled which include valves, pressure switches, pressure gauges, thermocouples,....

The plant control network (or more simply network) 11 provides the overall supervision of the controlled process, in conjunction with the plant operator, and obtains all the information needed to perform the supervisory function, and includes an interface with the operator. The plant control network 11 includes a plurality of physical modules, which include a universal operator station (US) 122, an application module (AM) 124, a history module (HM) 126, a computer module (CM) 128, and duplicates (backup or secondary) of these modules (and additional types of modules, not shown) as necessary to perform the required control/supervisory function of the process being controlled. Each of these physical modules is operatively connected to a local control network (LCN) 120 which permits each of these modules to communicate with each other as necessary. The NIM 602 and HG 601 provide an interface between the LCN 120 and the UCN 14, and the LCN 120 and the data highway 12, respectively.

Physical modules 122, 124, 126, 128,... of network 11 of the preferred embodiment are of various specialized functional types. Each physical module is the peer, or equivalent, of the other in terms of right of access to the network's communication medium, or LCN 120, for the purpose of transmitting data to other physical modules of network 11.

Universal operator station module (US) 122 of network 11 is a work station for one or more plant operators. It includes an operator console which is the interface between the plant operator, or operators, and the process or processes of the plant for which they are responsible. Each universal operator station module 122, is connected to the LCN 120, and all communications between the universal operator station module 122, and any other physical module of network 11, is via the LCN 120. Universal operator station module 122 has access to data that is on the LCN 120 and the resources and data available through, or from, any of the other physical modules of network 11. The universal station module 122 includes a cathode ray tube display (CRT) (not shown) which includes a video display generator, an operator keyboard (KB) (not shown), a printer (PRT) (not shown), and can also include (but not shown) a cartridge disk data storage device, trend pen recorders, and status displays, for example.

A history module (HM) 126 provides mass data storage capability. The history module 126 includes at least one conventional disk mass storage device such as a Winchester disk, which disk storage device provides a large volume of nonvolatile storage capability for binary data. The types of data stored by such a mass storage device are typically trend histories, event histories, ....or data from which such histories can be determined, data that constitutes or forms CRT type displays, copies of programs for the physical modules....

An application module (AM) 124 provides additional data processing capability in support of the process control functions performed by the controllers associated with the process control subsystem 20, 20' such as data acquisition, alarming, batch history collection, and provide continuous control computational facilities when needed. The data processing capability of the application module 124 is provided by a processor (not shown) and a memory (not shown) associated with the module.

Computer module (CM) 128 uses the standard or common units of all physical modules to permit a medium-to-large scale, general purpose data processing system to communicate with other physical modules of network 11 and the units of such modules over the LCN 120 and the units of process control subsystems 20, 20' via the highway gateway module 601, and the NIM 602, respectively. Data processing systems of a computer module 128 are used to provide supervisory, optimization, generalized user program preparation and execution of such programs in higher level program languages. Typically, the data processing systems of a computer module 128 have the capability of communicating with other such systems by a communication processor and communication lines.

The local control network 120 (LCN) is a high-speed, bit serial, dual redundant communication network that interconnects all the physical modules of plant control network 11. LCN 120 provides the only data transfer path between the principal sources of data, such as highway gateway module 601, application module 124, and history module 126, and principal users of such data, such as universal operator station module 122, computer module 128, and application module 124. LCN 120 also provides the communication medium over which large blocks of data, such as memory images, can be moved from one physical module such as history module 126 to universal station module 122. LCN 120 is dual redundant in that it consists of two coaxial cables that permit the serial transmission of binary signals over both cables.

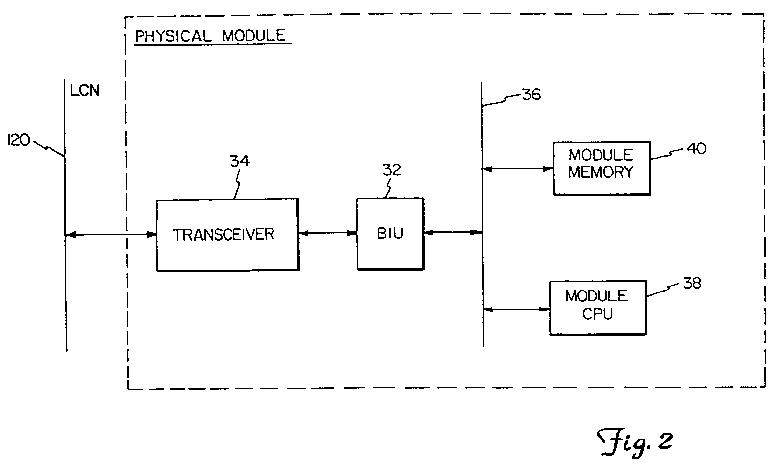

Referring to Figure 2, there is shown a block diagram of the common elements of each physical module of the network 11 or the process control system 10. Each of the physical modules includes a module central processor unit 38 and a module memory 40, a random-access memory (not shown), and such additional controller devices, or units (not shown), which are configured to provide the desired functionality of that type of module, i.e., that of the operator station 122, for example. The data-processing capabilities of each module's CPU 38 and module memory 40 create a distributed processing environment which provides for improved reliability and performance of network 11 and process control system 10. The reliability of network 11 and system 10 is improved because, if one physical module of network 11 fails the other physical modules will remain operational. As a result, network 11 as a whole is not disabled by such an occurrence as would be the case in centralized systems. Performance is improved by this distributed environment in that throughput and fast operator response times result from the increase computer processing resources, and the concurrency and parallelism of the data-processing capabilities of the system.

As mentioned above, each physical module includes the bus interface unit, BIU, 32 which is connected to the LCN 120 by the transceiver 34. Each physical module is also provided with the module bus 36 which, in the preferred embodiment, is capable of transmitting 16 bits of data in parallel, between the module CPU 38 and the module memory 40. Other units, utilized to tailor each type of physical module to satisfy its functional requirements, are operatively connected to module bus 36 so that each such unit can communicate with the other units of the physical module via its module bus 36. The BIU 32 of the physical module initiates the transmission of data over LCN 120. In the preferred embodiment, all transmissions by a BIU 32 are transmitted over the coaxial cables which, in the preferred embodiment, form the LCN 120.

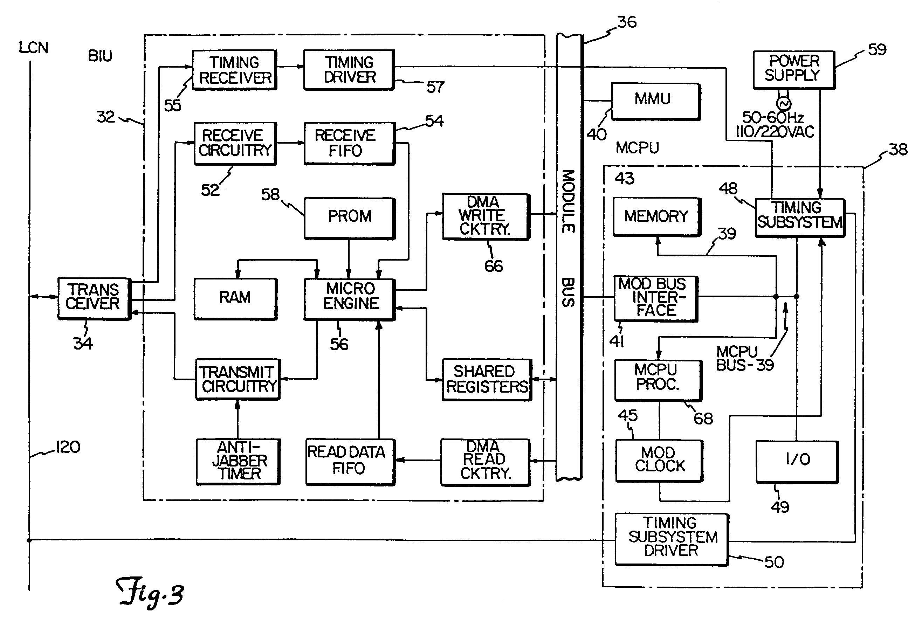

Referring to Figure 3 there is shown a functional block diagram of a typical physical module 122, 124, 126, 128 of the plant control network 11, and includes the bus interface unit (BIU) 32 and the transceiver 34, which connects BIU 32 to the LCN 120. BIU 32 is capable of transmitting binary data over LCN 120 and of receiving data from LCN 120. Transceiver 34 in the preferred embodiment, is transformer coupled to the LCN 120. In the preferred embodiment, the LCN 120 is a dually redundant coaxial cable with the capability of transmitting bit serial data. BIU 32 is provided with a very fast micro-engine 56. In the preferred embodiment, micro engine 56 is made up of bit slice components so that it can process eight bits in parallel, and can execute a 24 bit microinstruction from its programmable read only memory (PROM) 58.

Signals received from the LCN 120 are transmitted by transceiver 34 and receive circuitry 52 to receive FIFO register 54. Micro engine 56 examines the data stored in FIFO register 54 and determines if the information is addressed to the physical module. If the data is an information frame, the received data is transferred by direct memory access (DMA) write circuitry 66 by conventional direct memory access techniques to the physical module memory unit (MMU) 40 over module bus 36.

Communication between MCPU processor 68, a Motorola 68020 microprocessor in the preferred embodiment, and other functional elements of MCPU 38 is via local microprocessor bus 39. Module bus interface element 41 provides the communication link between local bus 39 and module bus 36. Processor 68 executes instructions fetched from either its local memory 43, in the preferred embodiment an EPROM, or from MMU 40. Processor 68 has a crystal controlled clock 45 which produces clock pulses, or timing signals. Input/output (I/O) port 49 provides communication between MCPU 38 and equipment external to the physical module to permit program loading, and the diagnosis of errors, or faults, for example.

Each MCPU 38 includes a timing subsystem 48 which, in response to clock signals from module clock 45 produces fine resolution, synchronization, and real-time, timing signals. Any timing subsystem 48 which is provided with a timing subsystem driver 50, has the capability of transmitting timing information to other physical modules over the LCN 120. Another input to each timing subsystem 48, is timing information which is transmitted over LCN 120 and which is received through transceiver 34, timing receiver 55 and timing driver 57 of BIU 32. Timing pulses from module power supply 59 which are a function of the frequency of the external source of A.C. electric power applied to power supply 59 are used by timing subsystem 48 to correct longer term frequency drift of the clock pulses produced by clock 45.

Additional information of the BIU 32 can be found in U.S. Patent No. 4,556,974. A more detailed description of the process control system 10 can be had by referring to U.S. Patent No. 4,607,256. Additional information of the individual, common, functional blocks of the physical modules can be had by reference to U.S. Patent No. 4,709,347, all of the above-identified patents being assigned to the assignee of the present application, and additional information of the process controller 20' can be had by referencing U.S. Patent No. 4,296,464.

The addition of an interface apparatus which interfaces other systems to the process control system 10 described above and a modification to a graphics generator in the US 122 opens up the existing system, specifically the graphics interface, which includes designing in the capability to readily permit nodes of differing designs to communicate to the network, and will now be described.

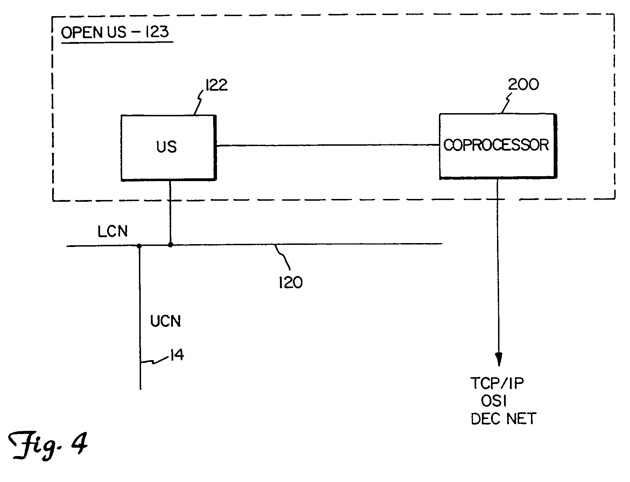

Referring to Figure 4, there is shown a partial functional block diagram of the existing system and the open (or opened) system. The universal operator station (US) 122 is coupled to a co-processor 200, and the co-processor is coupled to an open system, i.e., interfaces/protocols of differing design, including task control program/interface protocol (TCP/IP), open system interface (OSI), DECnet (a product of the Digital Equipment Corporation of Maynard, Massachusetts),.... The universal station 122 is also connected to the LCN 120 as described above. Thus, the new universal operator station (open US) 123 includes the US 122 as described above in conjunction with the co-processor 200. The purpose of the open US 123 is to open the graphical interface to the open systems and to provide information from the closed US to the open systems. The co-processor 200 is structured to permit the interface to other systems, i.e., the open systems without jeopardizing the integrity of the existing system. The co-processor 200 of the preferred embodiment is a Motorola 68040 microprocessor which is executing the UNIX operating systems (UNIX is an operating system of the American Telephone and Telegraph Company, ATT, is readily available and is well known to those skilled in the art), and is sometimes referred to as a UNIX co-processor.

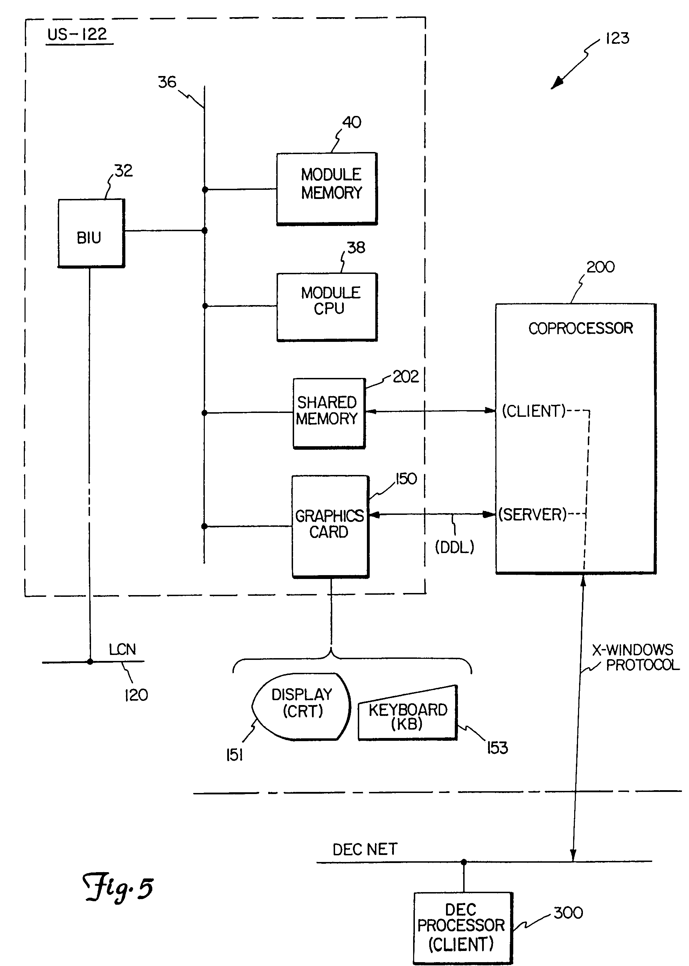

Referring to Figure 5, there is shown a functional block diagram of the open operator station 123 of the preferred embodiment. The operator station 122 as described above includes the BIU 32 connected to the module bus 36, the module memory 40, and the module CPU 38, both also connected to the module bus 36. These basic functional blocks are contained in all the physical modules. Additional functional blocks added to the physical module is what gives the physical module its personality apart from any other physical module. The operator station 122 includes a graphics card 150 which interfaces with a display (CRT) and a keyboard (KB) 151, 153. A shared memory 202 is included and is also connected to the module bus 36 which provides for communication between the co-processor 200 and the US physical module 122 (thereby providing communication to the rest of the process control system 10 via the module CPU 38). Thus, the co-processor 200 requests service (e.g., the value of a point, contents of a file,... or any information of the process control system 10) of the module CPU 38 through shared memory 202. The module CPU 38 then communicates with the appropriate module to perform the requested service in a normal fashion. Once the response is obtained the information is passed to the co-processor 200 via shared memory 202. Since the module CPU 3 is communicating via the LCN 120, the integrity of the LCN (i.e., the system) is maintained and similarly the modul memory 40 cannot be corrupted by the co-processor 200.

Also shown in Figure 5 is an example open system (or foreign system), for example, a Digital Equipment Corporation system which includes the DECnet network and protocol and DEC processor 300 attached to the DECnet network. In th preferred embodiment, the communication between the DEC ope system and the co-processor 200 is via an X-windows protoco (X-windows being a protocol defined by the Massachusetts Institute of Technology, Cambridge, Massachusetts) fo: graphical display information, and other open systems stan dards being used for data exchange. Any requests of the outside system to the LCN is made via the co-processor 20( through the shared memory 202 to the module CPU 38 as described above.

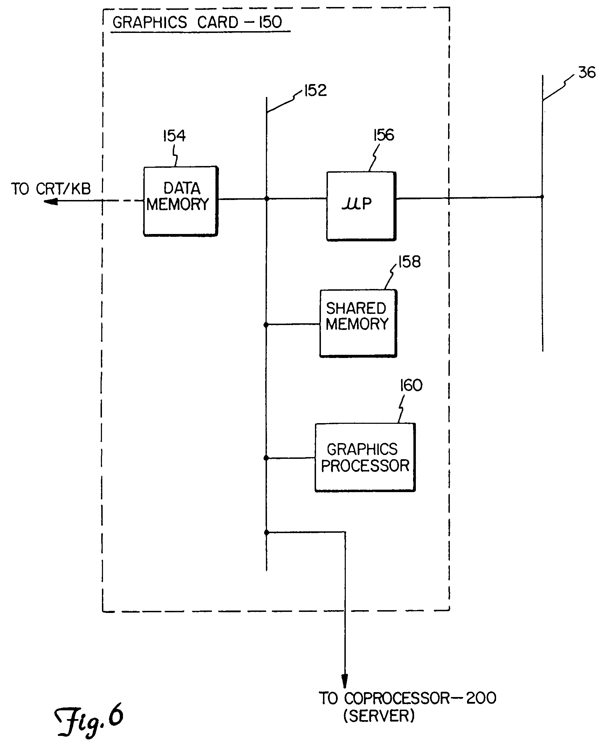

It is also desired to open up the graphics interface such that a display which is not on the LCN can be displayed onto the CRT 151 of the US 122. This is achieved by the interface to the graphic card 150 from the co-processor 200. Referrinc to Figure 6, there is shown a block diagram of the graphics card 150 of the preferred embodiment. The graphics card includes a card bus 152. Attached to the card bus 152 is a data memory 154 which contains the information which is to be displayed onto the CRT, and also contains some control information. A microprocessor 156 is also coupled to the carc bus 152 and further is coupled to the module bus 36. graphics processor 160 is coupled to the card bus 152 anc performs all the processing for developing the informatior stored in the data memory 154, including some control functions. A shared memory 158 is coupled to the card bus 152. A connection is made from the card bus 152 to the co-processor 200, thereby providing the interface mentioned above to the graphics card 150 from the co-processor 200. The microprocessor 156 of the preferred embodiment of the graphic card 15 is a Motorola 68020 processor. The graphics card 150 is a two port graphics card, one port of the graphics card being tied to the module bus 36 which is how a display is driven from LCN. The LCN 120 provides a "single window to the process," i.e., a screen display of what the process/process control system is doing. The second port is coupled to the co-processor 200 and provides the windows interface for the universal station 122. The windows interface is the X-windows interface which is well defined and well known to those skilled in the art (the interface being defined by MIT, Cambridge, Massachusetts). It is through the interface from the co-processor 200 that all the window displays [i.e., the screen display(s) of the open system(s)] and windows controls are performed, including commands to the graphic card 150 to specify where to place the single window to the process on the screen of the CRT 151. The interface between the graphics card 150 and the co-processor 200 is the full windows interface. One of the windows is the display referred to above as the "single window to the processor" (sometimes referred to as the LCN window). The co-processor 200 commands the graphics card 150 where the LCN window is to be placed on the CRT 151 and its relative size on the display. X-windows is a well defined protocol of how to communicate with the graphics card 150 (or any graphics card) and display, and a computer permitting many windows to be displayed. This includes displaying at least one window from the LCN and/or at least one window from the open system 300. In this system, a server is defined in X-windows as the machine that is driving the display (or that portion of the co-processor 200 which interfaces to the graphics card 150), and a client is the application program, in the present embodiment, the DEC processor 300.

The client 300 can have data which is desired to be displayed. The client 300 communicates with the server portion of the co-processor 200 through an X-windows protocol indicating data to be displayed. The server portion of the co-processor 200 communicates with the graphics card 150 through a device dependent layer (DDL) and is provided by the vendor of the graphics card, or in X-windows is via DDX protocol. The microprocessor 156 maintains the integrity of the card bus 152 into the data memory 154. The processing of the data to be displayed on the CRT 151 is performed by the graphics processor 160. When a predetermined data screen is to be displayed, the microprocessor 156 (which accepts requests from the LCN 120 via module bus 36) places the data in shared memory 158, and is subsequently processed by the graphics processor 160, and is then stored in data memory 154. When the open system 300 (via the client) desires to display some information, the information is communicated to the server portion of the co-processor 200 which then stores the information in the shared memory 158. The graphics processor 160 then processes that information and stores it in the data memory 154 for display. In that manner, and under the control of the graphics processor 160, the plurality of displays, i.e., windows, is displayed on the CRT 151.

It will be understood by those skilled in the art that the X-window protocol is essentially the open interface standard, the X-window protocol being readily available and well known to those skilled in the art. In the preferred embodiment the UNIX operating system is utilized, the UNIX operating system being able to run on many commercially available processors. Further information on the preferred embodiment of the graphics card 150 of the preferred embodiment of the US 122 can be had by reference to U.S. Patent Numbers 4,490,797 and 4,663,619, although it will be understood that any graphics card can be utilized as discussed above. The graphics processor 160 of the preferred embodiment of the present invention is a Texas Instruments (TI) TMS 34020. The microprocessor 156 and the module CPU 38 is a Motorola 68020. The co-processor 200 of the preferred embodiment of the present invention is a Motorola 68040, having bus capability with the other microprocessors of the system. It will be understood that a variety of processors can be utilized including a reduced instruction set processor which is available from Hewlett Packard among other processor manufacturers.

Although the preferred embodiment utilizes the UNIX operating system, it will be recognized by those skilled in the art that any operating system can be utilized, including OSF1, Open Systems Foundation/USA, Cambridge, Massachusetts. Although the co-processor 200 is controlling the display in the preferred embodiment the graphics card can also perform the display control. Since X-windows was readily available and performed the desired display control function, X-windows was utilized to take advantage of the availability of the desired control function. It will be recognized by those skilled in the art that implementation of the present invention is not limited to X-windows, and that any protocol can be utilized.

Thus it can be seen that the process control system 10 is open system permitting other system to interface into the LCN of the process control system and, because of the communication scheme as described above, the integrity of the process control system 10 is maintained. Further, the graphics card 150, although not in immediate control of the display unit 151, guarantees that the graphic view (control view) to a field device (i.e., valve,...) or any other controls view of the process control system on the display unit is always maintained regardless of the operational state of the co-processor 200. If the co-processor 200 is running and controlling the display unit 151 (and in particular the actual display on the screen of the display unit 151) and a malfunction occurs or some other anomaly occurs to the co-processor 200, the function of the graphics card 150 guarantees that a single view of the process control system is maintained. As discussed above, the co-processor is connected into the US 122 and has and controls a graphical interface through the display 151 and keyboard 153.

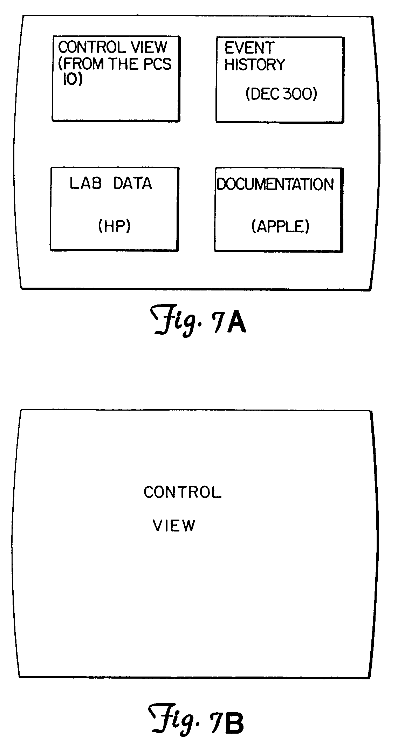

Referring to Figure 7, which comprises Figures 7A and 7B, there is shown an example of two displays of the display unit 151. Figure 7A shows an example of a typical normal display and Figure 7B shows a display when an anomaly occurs with the co-processor 200, or the fallback display. Figure 7A shows, for example, the windows which can be displayed. The windows always include a "view of the process", i.e., a control view from the process control system 10. Also included can be, for example, a window showing event history (a process control system application) coming from an outside system, running a process control system application, for example a DEC computer system 300 as shown in Figure 5. Another window can be data coming from another outside computer system (not shown), for example such as an Apple computer. This computer system car be running another application program referred to as documentation (in the preferred embodiment of the process control system the documentation of the process control system is created on an Apple computer). Still another window can be displayed, for example, lab data, coming from a Hewlett Packard computer system. The windows, except for the control view, are displayed on a single screen of the display unit 151, the display information for these windows coming from a number of outside computer systems connected into the co-processor 200. If an error is detected with the co-processor 200, the method of the present invention guarantees that the display windows from the outside systems are inhibited and the control view is the only display shown and is zoomed to take up the entire screen of the display unit 151. This observation also serves as an indication to the operator that a malfunction has occurred with the interface to the outside systems.

The utilization of a low resolution touch screen system in a high resolution graphics environment, the method of the present invention, will now be described. The display of the present invention has a 1280 by 1024 resolution, i.e., 1280 pixels wide by 1024 pixels high. A single character on the display is an 8 by 8 pixels character, and it is desirable to be able to position to a character. The touch screen system of the present invention is an infrared technology having X coordinate and Y coordinate beams across the display which are broken upon pointing to a desired position of the display. The pointing can be done by a finger (a pen, pencil, stylus,...) which breaks the beams. As is well known to those skilled in the art one side of the touch screen system includes LEDs and on the opposite side sensors are placed which receive the signal from the LEDs. When the beam is broken a report is transmitted by the touch screen system to an information processing apparatus identifying the coordinate inputs of the position desired. In order for a report to be transmitted, both an X beam and a Y beam must be broken. The present invention utilizes a touch screen having a resolution of 127 wide by 95 high. Thus for an 8 by 8 character size, a display resolution of 1280 by 1024 has a resultant target resolution of 160 wide by 128 high. In this particular instance the target resolution is higher then the touch screen resolution, the touch screen resolution being 127 by 95. Thus the desired objective of being able to position to a character cannot be met.

In order to be able to achieve the desired objective of positioning to a single character, the display is zoomed such that the character resolution around the reported position has a character resolution of 16 by 16. This results in a target resolution of 80x64. As a result of the lower target resolution, the touch screen resolution of 127 wide by 95 high results in having at least one beam cross a character, being able to position to a desired character.

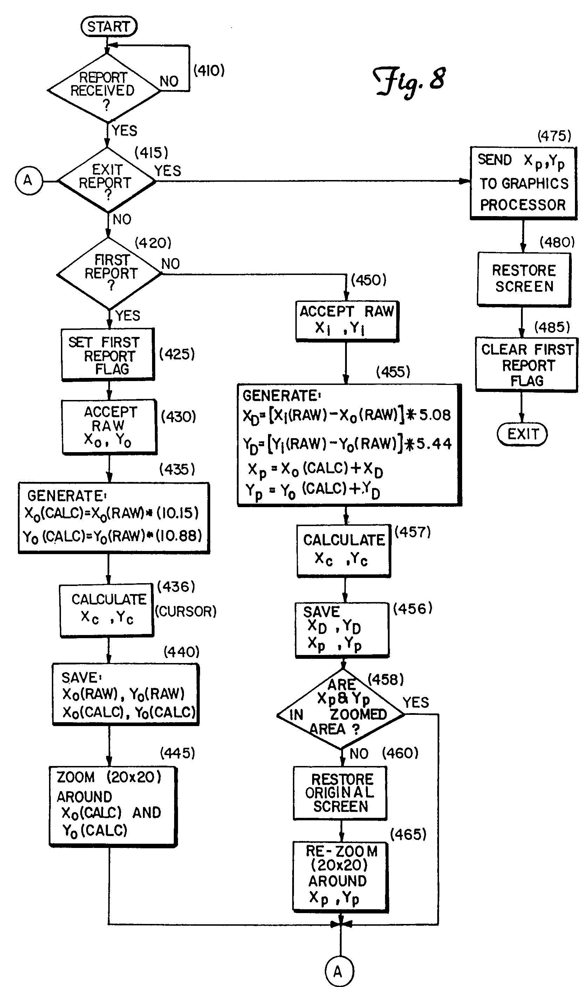

The method of the present invention is shown in Figure 8. Referring to Figure 8 there is shown a flow diagram of the method of the present invention. When the finger (or stylus) is inserted onto the touch screen such that an X and Y beam are broken (block 410), a report is received by the information handling apparatus, in the preferred embodiment the graphics processor 160 of the process control system 10. Upon the first entry of the finger or stylus onto the display screen, the report also indicates that this is an entry report (block 415). The graphics processor 160 checks to verify whether this is the first report (block 420) and if it is sets a first report flag (block 425). The raw $X_o$ and $Y_o$ positions from the touch screen system is accepted by the graphics processor 160 (block 430). The graphics processor calculates $X_o$ (CALC) and a $Y_o$ (CALC) utilizing the RAW $X_o$ and RAW $Y_o$ positions from the touch screen systems (block 435). The coarsen position $X_c$, $Y_c$ is also determined using the equations:

$$X_c = X_i (RAW) * 10.15$$
$$Y_c = Y_i (RAW) * 10.88 ;$$

where $X_i = X_o$ for the first report. These positions, i.e., the RAW positions and calculated positions are saved (block 440), and the graphics processor zooms around the $X_o$ and the $Y_o$ calculated position (block 445). In the preferred embodiment of the present invention, a 20 by 20 character area is zoomed around the $X_o$ and $Y_o$ calculated a backward calculation to determine the position of the desired character. The screen is restored (block 480) and the first report flag is cleared (block 485). This processinc routine for the touch screen system is then exited.

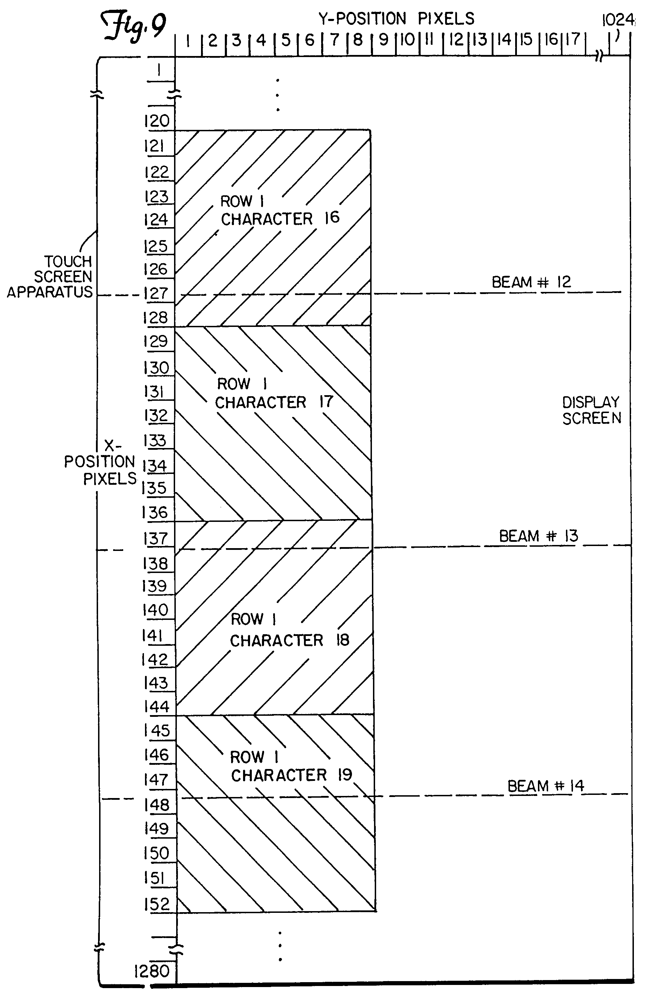

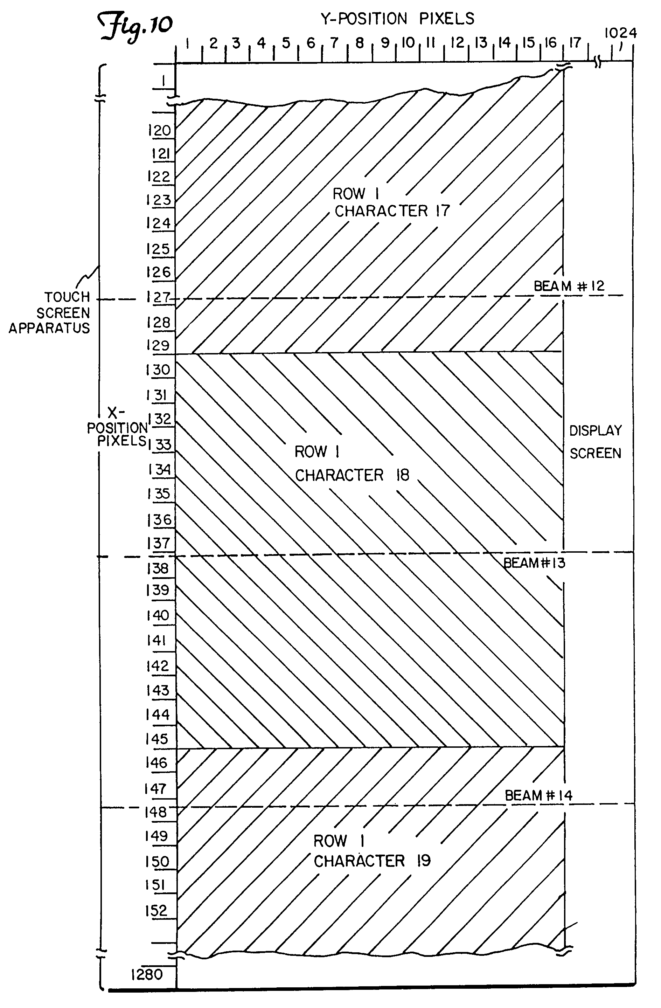

Referring to Figure 9 there is shown a partial display screer showing row 1 of characters 16 through 19. The X positior pixels and Y position pixels of the display screen are alsc shown for the pertinent characters. The touch screen apparatus includes only the X beams (but will also apply for the Y beams although not shown). Beams 12, 13, and 14 are shown intersecting characters 16, 18, and 19. This is because the resolution of the touch screen apparatus as mentioned above is lower than the target resolution, assuming for purposes of example here that the target character is character 17. With a touch screen resolution of 127 by 95 pixels for the touch screen and a target resolution of 160 by 128, the beams can only cross approximately one out of every ten pixels. Thus for a character having 8 pixels there will be a number of characters which will not have an intersecting or crossing beam. Referring to Figure 10, there is shown a partial zoomed area of the display of Figure 9. Generally the finger or stylus will break 2 or 3 beams, rarely 4 beams in each direction. Let's assume for purposes of example that X beams 12, 13, and are broken, character 17 being the character attempted to pointed to (i.e., the desired character). The X coordinate position for beam 13 is transmitted as the $X_o$ RAW position. The calculated positions effectively convert the X and Y coordinate of the touch screen system to the corresponding X and Y coordinate of the display screen, which is how the factors 10.15 and 10.88 are determined.

A new report is transmitted to the graphics processor 160 by the touch screen system about every 1/16 of a second, i.e., 16 reports per second. Since the initial report, as a result of placing the finger onto the touch screen, may not result in identifying the desired character, the finger or stylus may be moved. On each subsequent report, since the finger or stylus is still on the screen, the exit report check of block 415 will indicate a no; however, the first report determination will also be a no thus proceeding to block 450. The graphics processor 160 accepts the RAW $X_i$ and $Y_i$ data from the touch screen system (block 450), and generates an $X_d$ and $Y_d$ position, and an $X_p$ and $Y_p$ position (block 455). All coordinates received after the initial coordinates as treated as relative coordinates. This is done by receiving the new RAW coordinates $X_i$ and $Y_i$ from the touch screen system and then subtracting the $X_o$ and $Y_o$ RAW coordinates and multiplying the difference by 5.08 for the X coordinate and 5.44 for the Y coordinate. $X_d$ and $Y_d$ are then added to the initial $X_o$ and $Y_o$ absolute display coordinate values resulting in a new point position relative to the initial touch coordinates. Since the multiplication constants is 1/2 the original multiplication constants, the result is that the relative position of the new point is 1/2 the display resolution and therefore obtains the same result as a 640 by 512 display system for selecting the target. Thus, in order to be effective at 1/2 the display resolution in the relative mode, the display is zoomed by a factor of two. For this reason, the display is zoomed around the area of the original touch by a factor of two, i.e., 16 by 16 pixel character size. A new position for the cursor is calculated (block 457). Thus the $X_c$, $Y_d$ are saved (block 456) along with the newly calculated X and Y position $X_p$ and $Y_p$. A check is made to determine if the new point $X_p$ and $Y_p$ are in the zoomed area (block 458). If it is, the processing continues at block 415. If the new point is outside the zoomed area, the original screen is restored (block 460), and the display is then rezoomed around newly calculated $X_p$ and $Y_p$ (block 465) but placed on the screen centered around $X_c$, $Y_c$. The characters are zoomed to a 16 by 16 pixel size and showing a 20 by 20 character around the new center position. As an alternative, block 458 can be omitted. Thus, the finger or stylus is moved, the zoomed area follows the stylus at half the distance (or half the "speed") such that ultimately the desired character is pointed to by the finger or stylus. When the desired character is pointed to (by the finger and thus by the cursor), this situation occurs the finger or stylus is withdrawn. When this occurs the touch screen system transmits an exit report to the graphics processor 160 and the graphics processor now has the $X_p$ and $_p$ position (block 475) and performs value.

According to the present invention character 18 will be the "pointed to" character such that character 18 will be zoomed to a 16 by 16 character size (including 20 by 20 characters around that initial position according to the present invention). Since character 17 is the desired character, as the finger is moved towards character 17 the cursor will follow. (For the alternative embodiment, i.e., without block 458, the zoomed area moves at "half the speed" in a relative manner.) At a point in time when character 17 is below the finger, finger is withdrawn. The beam positions are transmitted to the processing device which will calculated the $X_p$ and $Y_p$ position which identifies character 17, in accordance with the method of the present invention as described above. When the finger is withdrawn the display is restored to its original.

While there has been shown what is considered the preferred embodiment of the present invention, it will be manifest that any changes and modifications can be made therein without departing from the essential spirit and scope of the invention. It is intended, therefor, in the annexed claims to cover all such changes and modifications which fall within the true scope of the invention.

**Claims**

1. Apparatus for selecting a character being displayed on a display using a pointer element, wherein the display has a first resolution and a touch screen system associated with the display has a second resolution, and wherein the character has a third resolution resulting in a target resolution, and further wherein the target resolution is higher that the resolution of the touch screen system, the touch screen system transmitting to a data processing unit processing the display, and X and Y coordinate signal of the character pointed to, the apparatus characterised by:-

a) means, when a character is pointed to, to accept an initial X and Y coordinate value from the touch screen system;

b) means to calculate a corresponding X and Y coordinate value of the display;

c) means to save the initial X and Y coordinate values and the corresponding calculated X and Y coordinate values;

d) means to zoom the display a predetermined number of characters around the initial X and Y coordinate values;

e) means to move the pointer element towards the character to be selected if the character is not under the pointer;

f) means to continue to accept updated X and Y coordinate position values of the current pointer location on a periodic basis;

g) means to calculate a new point to zoom the display, the new point following the pointer element at a predetermined speed less than the speed of the pointer element;

h) means, if the new point is within the zoomed area, to proceed to moving means (e), otherwise to proceed to the next step;

i) means to restore the display;

j) means to rezoom the display around the new point;

k) means to repeat the operation from step (e) until the desired character is under the pointer; and

l) means to withdraw the pointer element, the new point calculated from step (g) having the X and Y coordinate values of the desired character, thereby permitting the desired character to be selected when the target resolution is higher than the resolution of the touch screen system.

2. Apparatus according to Claim 1 characterised in that zooming means comprises:

means to zoom each character within the predetermined number of characters around the initial X and Y coordinate values wherein each of the zoomed characters has a fourth resolution, such that the resultant target resolution is less than the resolution of the touch screen system, thereby permitting a predetermined character to be selected using the pointer element.

3. Apparatus according to Claim 1 characterised by rezooming means to rezoom the display around the new point centred around a cursor position, the cursor position being essentially the position of the pointer element.

4. Apparatus according to any preceding Claim characterised in that the fourth resolution, the resolution of the zoomed characters, is twice the third resolution, the resolution of the characters displayed on the display.

5. Apparatus according to any preceding Claim, characterised in that the predetermined number of characters zoomed around the initial X and Y coordinates is 20 characters by 20 characters.

6. Apparatus according to any preceding Claim, characterised in that the means to calculate a new point to zoom the display generates the new point coordinates from the current pointer location to a relative position from the initial X and Y coordinate value, the relative position being a factor less than one, such that at the pointer element is moved the pointer element ultimately gets to a position on the display wherein the pointer element points to the desired character.

7. Apparatus according to Claim 6 characterised in that the factor used to determine the relative position of the new point is one half.

8. Apparatus for selecting a character being displayed on a display using a pointer element, wherein the display has a first resolution and a touch screen system associated with the display has a second resolution, and wherein the character has a third resolution resulting in a target resolution, and further wherein the target resolution is higher than the resolution of the touch screen system, the touch screen system transmitting to a data processing unit processing the display, and X and Y coordinated signal of the character pointed to, the apparatus characterised by:-

a) means, when a character is pointed to, to accept an initial X and Y coordinate value from the touch screen system;

b) means to calculate a corresponding X and Y coordinate value of the display;

c) means to save the initial X and Y coordinate values and the corresponding calculated X and Y coordinate values;

d) means to zoom the display a predetermined number of characters around the initial X and Y coordinated values;

e) means to move the pointer element towards the character to be selected if the character is not under the pointer, otherwise means to proceed to withdrawing means of (k);

f) means to continue to accept updated X and Y coordinate position values of the current pointer location on a periodic basis;

g) means to calculate a new point to zoom the display, the new point following the pointer element at a predetermined speed less than the speed of the pointer element;

h) means to restore the display;

i) means to rezoom the display around the new point;

j) means to repeat the method from stage (e) until the desired character is under the pointer; and

k) means to withdraw the pointer element, the new point calculated from stage (g) having the X and Y coordinate values of the desired character, thereby permitting the desired character to be selected when the target resolution is higher than the resolution of the touch screen system.

9. A method for selecting a character being displayed on a display using a pointer element, wherein the display has a first resolution and a touch screen system associated with the display has a second resolution, and wherein the character has a third resolution resulting in a target resolution, and further wherein the target resolution is higher that the resolution of the touch screen systems the touch screen system transmitting to a data processing unit processing the display, and X and Y coordinate signal of the character pointed to, the method characterised by:-

a) when a character is pointed to, accepting an initial X and Y coordinate value from the touch screen system;

b) calculating a corresponding X and Y coordinate value of the display;

c) saving the initial X and Y coordinate values and the corresponding calculated X and Y coordinate values;

d) zooming the display a predetermined number of characters around the initial X and Y coordinate values;

e) moving the pointer element towards the character to be selected if the character is not under the pointer;

f) continuing to accept updated X and Y coordinate position values of the current pointer location on a periodic basis;

g) calculating a new point to zoom the display, the new point following the pointer element at a predetermined speed less than the speed of the pointer element;

h) if the new point is within the zoomed area, proceeding to step (e), otherwise proceeding to the next step;

i) restoring the display;

j) rezooming the display around the new point;

k) repeating the operation from step (e) until the desired character is under the pointer; and

l) withdrawing the pointer element, the new point calculated from step (g) having the X and Y coordinate values of the desired character, thereby permitting the desired character to be selected when the target resolution is higher than the resolution of the touch screen system.

10. A method according to Claim 1 characterised in that the step of zooming comprises the step of:

zooming each character within the predetermined number of characters around the initial X and Y coordinate values wherein each of the zoomed characters has a fourth resolution, such that the resultant target resolution is less than the resolution of the touch screen system, thereby permitting a predetermined character to be selected using the pointer element.

11. A method according to Claim 9 or 10 characterised in that the step of rezooming the display comprises the steps of:

rezooming the display around the new point centred around a cursor position, the cursor position being essentially the position of the pointer element.

12. A method according to any of Claims 9 to 11 characterised in that the fourth resolution, the resolution of the zoomed characters, is twice the third resolution, the resolution of the characters displayed on the display.

13. A method according to any of Claims 9 to 12 characterised in that the predetermined number of characters zoomed around the initial X and Y coordinates is 20 characters by 20 characters.

14. A method according to any of Claims 9 to 13 characterised in that the step of calculating a new point to zoom the display generates the new point coordinates from the current pointer location to a relative position from the initial X and Y coordinate value, the relative position being a factor less than one, such that as the pointer element is moved the pointer element ultimately gets to a position on the display wherein the pointer element points to the desired character.

15. A method according to Claim 14 characterised in that the factor used to determine the relative position of the new point is one half.

16. A method for selecting a character being displayed on a display using a pointer element, wherein the display has a first resolution and a touch screen system associated with the display has a second resolution, and wherein the character has a third resolution resulting in a target resolution, and further wherein the target resolution is higher than the resolution of the touch screen system, the touch screen system transmitting to a data processing unit processing the display, and X and Y coordinate signal of the character pointed to, the method characterised by the steps of:-

a) when a character is pointed to, accepting an initial X and Y coordinate value from the touch screen system;

b) calculating a corresponding X and Y coordinate value of the display;

c) saving the initial X and Y coordinate values and the corresponding calculated X and Y coordinate values;

d) zooming the display a predetermined number of characters around the initial X and Y coordinated values;

e) moving the pointer element towards the character to be selected if the character is not under the pointer, otherwise proceeding to step (k);

f) continuing to accept updated X and Y coordinate position values of the current pointer location on a periodic basis;

g) calculating a new point to zoom the display, the new point following the pointer element at a predetermined speed less than the speed of the pointer element;

h) restoring the display;

i) rezooming the display around the new point;

j) repeating the method from stage (e) until the desired character is under the pointer; and

k) withdrawing the pointer element, the new point calculated from stage (g) having the X and Y coordinate values of the desired character, thereby permitting the desired character to be selected when the target resolution is higher than the resolution of the touch screen system.

**PLANT CONTROL NETWORK – 11**

122  US
124  AM
126  HM
128  CM

LCN
120

10

NIM  602
HG  601

UCN
14

DATA HIGHWAY
12

**PROCESS CONTROLLER – 20**

A/I  A/O  D/I  D/O

TO/FROM
FIELD DEVICES
(GUAGES, VALVES,...)

**PROCESS CONTROLLER – 20'**

A/I  A/O  D/I  D/O

TO/FROM
FIELD DEVICES

*Fig. 1*

Fig. 2

**Fig.3**

LCN

BIU

TIMING RECEIVER — 55

TIMING DRIVER — 57

32

RECEIVE CIRCUITRY — 52

RECEIVE FIFO — 54

58 — PROM

DMA WRITE CKTRY. — 66

TRANS CEIVER — 34

RAM

MICRO ENGINE — 56

SHARED REGISTERS

TRANSMIT CIRCUITRY

ANTI-JABBER TIMER

READ DATA FIFO

DMA READ CKTRY.

120

MODULE BUS — 36

MMU — 40

MCPU

POWER SUPPLY — 59

50-60Hz 110/220VAC

38

43

MEMORY

39

TIMING SUBSYSTEM — 48

MOD BUS INTER-FACE — 41

MCPU BUS-39

MCPU PROC. — 68

45

MOD CLOCK

I/O — 49

TIMING SUBSYSTEM DRIVER — 50

EP 0 575 146 A2

OPEN US – 123

122

US

200

COPROCESSOR

LCN

120

UCN

14

TCP/IP
OSI
DEC NET

Fig. 4

EP 0 575 146 A2

*Fig. 5*

GRAPHICS CARD — 150

154
TO CRT/KB ← DATA MEMORY

152

156
μP

36

158
SHARED MEMORY

160
GRAPHICS PROCESSOR

TO COPROCESSOR—200 (SERVER)

*Fig.6*

*Fig.* 7A

*Fig.* 7B

*Fig. 8*

START

REPORT RECEIVED ? (410) — NO

YES

(A) — EXIT REPORT ? (415) — YES → SEND $X_p, Y_p$ TO GRAPHICS PROCESSOR (475)

NO

FIRST REPORT ? (420) — NO → ACCEPT RAW $X_1, Y_1$ (450)

YES

SET FIRST REPORT FLAG (425)

ACCEPT RAW $X_0, Y_0$ (430)

GENERATE: (435)
$X_0(CALC) = X_0(RAW) * (10.15)$
$Y_0(CALC) = Y_0(RAW) * (10.88)$

CALCULATE $X_c, Y_c$ (CURSOR) (436)

SAVE: (440)
$X_0(RAW), Y_0(RAW)$
$X_0(CALC), Y_0(CALC)$

ZOOM (20x20) AROUND $X_0(CALC)$ AND $Y_0(CALC)$ (445)

GENERATE: (455)
$X_D = [X_1(RAW) - X_0(RAW)] * 5.08$
$Y_D = [Y_1(RAW) - Y_0(RAW)] * 5.44$
$X_p = X_0(CALC) + X_D$
$Y_p = Y_0(CALC) + Y_D$

CALCULATE $X_c, Y_c$ (457)

SAVE $X_D, Y_D$ $X_p, Y_p$ (456)

ARE $X_p$ & $Y_p$ IN ZOOMED AREA ? (458) — YES

NO (460)

RESTORE ORIGINAL SCREEN

RE-ZOOM (20x20) AROUND $X_p, Y_p$ (465)

(A)

RESTORE SCREEN (480)

CLEAR FIRST REPORT FLAG (485)

EXIT

19

Fig. 9

Fig.10